(19) Europäisches Patentamt

European Patent Office

Office européen des brevets

(11) **EP 1 031 195 B1**

(12) **EUROPÄISCHE PATENTSCHRIFT**

(45) Veröffentlichungstag und Bekanntmachung des Hinweises auf die Patenterteilung:
**05.06.2002  Patentblatt 2002/23**

(21) Anmeldenummer: **98961030.8**

(22) Anmeldetag: **21.10.1998**

(51) Int Cl.⁷: **H04B 7/26**, H04B 1/707

(86) Internationale Anmeldenummer:
**PCT/DE98/03089**

(87) Internationale Veröffentlichungsnummer:
**WO 99/25078 (20.05.1999 Gazette 1999/20)**

(54) **VERFAHREN, EMPFANGSEINRICHTUNG UND MOBILSTATION ZUR DATENÜBERTRAGUNG IN EINEM FUNK-KOMMUNKATIONSSYSTEM**

PROCESS, RECEIVER AND MOBILE STATION USED FOR DATA TRANSMISSION IN A RADIO COMMUNICATION SYSTEM

PROCEDE, RECEPTEUR ET STATION MOBILE PERMETTANT LA TRANSMISSION DE DONNEES DANS UN SYSTEME DE RADIOCOMMUNICATION

(84) Benannte Vertragsstaaten:
**DE FR GB**

(30) Priorität: **07.11.1997  DE 19749389**

(43) Veröffentlichungstag der Anmeldung:
**30.08.2000  Patentblatt 2000/35**

(73) Patentinhaber: **SIEMENS AKTIENGESELLSCHAFT**
**80333 München (DE)**

(72) Erfinder: **HAARDT, Martin**
**D-81477 München (DE)**

(56) Entgegenhaltungen:
**WO-A-97/05707**          **US-A- 5 544 156**

• **JUNG P ET AL: "A JOINT DETECTION CDMA MOBILE RADIO SYSTEM CONCEPT DEVELOPED WITHIN COST 231" PROCEEDINGS OF THE VEHICULAR TECHNOLOGY CONFERENCE, CHICAGO, JULY 25 - 28, 1995, Bd. 1, Nr. CONF. 45, 25. Juli 1995, Seiten 469-473, XP000550217 INSTITUTE OF ELECTRICAL AND ELECTRONICS ENGINEERS**

**Beschreibung**

Die Erfindung betrifft ein Verfahren, eine Empfangseinrichtung und eine Mobilstation zur Datenübertragung in einem Funk-Kommunikationssystem, insbesondere in TD/CDMA-Mobilfunksystemen.

In der WO 97/05707 A ist ein Verfahren und eine Empfangseinrichtung gemäß den Oberbegriffen der Ansprüche 1 und 16 beschrieben.

In Funk-Kommunikationssystemen werden Nachrichten (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900, 1800 bzw. 1900 MHz. Für zukünftige Mobilfunknetze, beispielsweise das UMTS (Universal Mobile Telecommunication System) oder andere Systeme der 3. Generation, sind Frequenzen im Frequenzband von ca. 2000 MHz vorgesehen,

Das gegenwärtig existierende Mobilfunksystem GSM (Global System for Mobile Communications) ist ein Mobil-Kommunikationssystem mit einer TDMA-Kmponente zur Teilnehmerseparierung (Time Division Multiple Access). Gemäß einer Rahmenstruktur werden Nutzinformationen der Teilnehmerverbindungen in Zeitschlitzen übertragen. Die Übertragung erfolgt blockweise. Aus dem GSM-Mobilfunksystem sind weiterhin ebenfalls dem Zeitraster der Rahmenstruktur angepaßte Organisationskanäle (BCCH broadcast control channel) zur Übertragung von Signalisierungs- und Organisationsinformationen an alle Mobilstationen in der jeweiligen Funkzelle bekannt. Diese Organisationsinformationen umfassen Angaben zum Aufenthaltsbereich, zur Funkzelle, zur Kanalstruktur und zu Optionen, die innerhalb der Zeile unterstützt werden. Weitere Signalisierungsinformationen werden in Abwärtsrichtung gesendet.

Anhand des Organisationskanals, der mit maximaler Leistung abgestrahlt wird, nimmt eine Mobilatation Leistungsmessungen vor, die Aussagen über die für einen Verbindungsaufbau oder eine Übergabe (Handover) geeignete Funkzelle zulassen. Dieser Organisationskanal wird im Frequenzbereich der Nutzinformationen in einem eigenen Zeitschlitz übertragen.

Aus DE 197 13 667 ist ein Funk-Kommunikationssystem mit TDMA/CDMA-Teilnehmerseparierung (Code Division Multiple Access) bekannt, bei dem die Organisationsinformationen als erste Signalisierungsinformationen ebenfalls zusammen mit weiteren Informationen, z.B. mit Nutzinformationen, in einem Frequenzbereich abgestrahlt werden. Der Nachteil dieser Lösung liegt in den zusätzlichen Interferenzen, die der Organisationskanal für die Nutzdatenkanäle mit sich bringt. Anderseits stören die Nutzinformationen oder weiteren Signalisierungsinformationen auch die Übertragung der ersten Signalisierungssinformationen. Auch die Reichweite des Organisationskanals wird reduziert.

Aufgabe der Erfindung ist es, die Detektion der weiteren Informationen zu verbessern. Diese Aufgabe wird durch das Verfahren mit den Merkmalen des Patentanspruchs 1, die Empfangseinrichtung mit den Merkmalen des Patentanspruchs 16 und die Mobilstation mit den Merkmalen des Patentanspruchs 19 gelöst. Vorteilhafte Weiterbildungen sind den Unteransprüchen zu entnehmen.

Ein erfindungsgemäßes Verfahren zur Datenübertragung zwischen Funkstationen in einem Funk-Kommunikationssystem sieht sendeseitig eine Überlagerung von ersten Signalisierungsinformationen mit weiteren Informationen zu einem Summensignal vor. Diese Informationen werden zeitgleich übertragen. Das Summensignal wird anschließend in einem Frequenzkanal gesendet,
wobei die unterschiedlichen Informationen anhand von individuellen Feinstrukturen unterscheidbar sind. Empfangsseitig wird ein Empfangssignal ausgewertet, wobei ein Einfluß der ersten Signalisierungsinformationen auf die weiteren Informationen durch eine Ausgleichsrechnung entfernt wird. Anschließend wird eine Detektion der weiteren Informationen durchgeführt.

Durch die Maßnahme des Ausgleichens des Einflusses der ersten Signalsierungsinformationen vor einer Detektion der weiteren Informationen werden die Störungen auf die zu detektierenden weiteren Informationen verringert. Die ersten Signalsierungsinformationen können ohne Qualitätseinbußen mit höherer Sendeleistung, z.B. mit der Sendeleistung der weiteren Informationen, abgestrahlt werden, wodurch die Reichweite steigt.

Somit können auch weiter entfernte Funkstationen, z.B. Mobilstationen in benachbarten Funkzellen, die ersten Signalisierungsinformationen zur Leistungsmessung und Zellselektion benutzen. Die Übertragung der weiteren Informationen braucht erfindungsgemäß nicht kohärent mit den ersten Signalisierungsinformationen erfolgen. Die Übertragung erfolgt zwar in einem gemeinsamen Frequenzband, d.h. mit leistungsmäßiger Überlagerung, doch besteht keine Korrelation zwischen den Signalanteilen im Sendesignal.

Besonders vorteilhaft wirkt das erfindungsgemäße Verfahren, falls sendeseitig die ersten Signalisierungsinformationen mit geringerer Richtungsselektivität als die weiteren Informationen abgestrahlt werden. Bei unterschiedlicher Richtungsselektivität wird empfangsseitig eine Kanalschätzung anhand von in die weiteren Informationen eingebetteter Trainingssequenzen durchgeführt.

Die geringere Richtungsselektivität kann durch einen höheren Prozessgewinn ausgeglichen werden. Der höhere Prozessgewinn kann beispielsweise durch die Wahl eines höheren Spreizfaktors für die ersten Signalisierungsinformationen realisiert werden.

Der größere Spreizfaktor für die ersten Signalisierungsinformationen wird nach einer vorteilhaften Ausprägung dadurch erzielt, daß deren Symbole eine länge Symboldauer haben als Symbole der weiteren Informationen. Die Symboldauer der ersten Signalisierungsinformationen kann ein ganzzahliges Vielfaches der weiteren Informationen sein. Somit können die Chips aller die Feinstrukturen bildenden CMDA-Codes eine Chiplänge (bzw. ein ganzzahliges Vielfaches davon) haben. Zur Erzeugung der Chips kann folglich ein gemeinsamer Takt verwendet werden.

Der größere Prozessgewinn für die Organisationsinformationen wird vorteilhafterweise dadurch erreicht, daß im Vergleich zur Datenrate der Nutzinformationen eine wesentlich geringere Datenrate, die beispielsweise kleiner oder gleich 1 kBit/s ist, verwendet wird. Die Organisationsinformationen werden also auf die wesentlichsten Angaben beschränkt, die jedoch sehr störresistent übertragen werden. Sobald eine Mobilstation in einer Funkzelle eingebucht ist, sind die ersten Signalisierungsinformationen der Mobilstation bekannt und können somit bei der darauffolgenden Detektion der weiteren Informationen eliminiert werden.

Nach einer alternativen Weiterbildung der Erfindung werden sendeseitig die ersten Signalisierungsinformationen und die weiteren Informationen mit in etwa gleicher Richtungsselektivität abgestrahlt und empfangsseitig eine Kanalschätzung anhand der ersten Signalisierungsinformationen durchgeführt. Da die Übertragungskanäle in diesem Fall für alle Informationen ähnlich sind, reicht eine einzige Kanalschätzung aus. Dies bedeutet eine Aufwandsreduzierung beim Empfänger. Vorteilhafterweise werden sendeseitig die weiteren Informationen ohne Trainingssequenzen mit verlängertem Datenteil gesendet.

Somit kann die Datenrate für die weiteren Informationen erhöht werden.

Wird empfangsseitig ein Antennendiversitäts-Verfahren angewendet, so ist es vorteilhaft, das Entfernen des Einflusses der Signalisierungsinformationen für die Empfangssignale jedes einzelnen Antennenelements durchzuführen. Die dadurch verbesserten Empfangssignale können daraufhin zur Detektion der weiteren Informationen mit einem Algorithmus zur gemeinsamen Detektion ausgewertet werden. Damit wird auch die gegenseitige Beeiflussung der weiteren Informationen verringert.

Das erfindungsgemäße Verfahren kann vorteilhafterweise für zwei alternative Sendeverfahren eingesetzt werden. Nach einer ersten Variante werden sendeseitig die ersten Signalisierungsinformationen in einer Dauerwellenübertragung abgestrahlt, währenddessen die weiteren Informationen in Zeitschlitzen nach einem TDMA-Übertragungsverfahren abgestrahlt werden. Nach einer zweiten Variante werden sendeseitig die ersten Signalisierungsinformationen und die weiteren Informationen in Zeitschlitzen nach einem TDMA-Übertragungsverfahren abgestrahlt werden. Damit läßt sich das erfindungsgemäße Verfahren auf einfache Weise in Funk-Kommunikationssystem mit dem bekannten TD/CDMA-Übertragungsverfahren implementieren. Es können jedoch auch alle Informationen in Dauerwellenübertragung abgestrahlt werden.

Das Entfernen des Einflusses der ersten Signalisierungsinformationen erfolgt beispielsweise derart, daß eine Kanalschätzung für die ersten Signalisierungsinformationen durchgeführt wird und Kanalkoeffizienten ermittelt werden. Von dem Empfangssignal wird eine Größe subtrahiert, die dem Produkt der Kanalkoeffizienten und einer bekannten Matrix von zumindest Teilen der ersten Signalisierungsinformationen entspricht. Die Matrix liegt dabei in der empfangenden Funkstation vor. Das Ermitteln der Kanalkoeffizienten erfolgt vorteilhafterweise durch eine Gauss-Markov-Schätzung.

Um den Empfang weiter zu verbessern ist es vorteilhaft, das Entfernen des Einflusses der ersten Signalisierungsinformationen basierend auf Kanalschätzungen zu mehreren Zeitpunkten durchzuführen. Damit erfolgt ein Fehlerausgleich für die Kanalschätzung. Ein Zeitintervall, über das die Kanalschätzung durchgeführt wird, kann empfangsseitig entsprechend der Übertragungbedingungen eingestellt werden. Weiterhin sind vorteilhafterweise adaptive Kanalschätzmethoden einsetzbar, bei denen die aktuell geschätzen Kanalkoeffizienten höhere gewichtet werden als die zuvor geschätzen Kanalkoeffizienten, die ebenfalls in die Ausgleichsrechnung einbezogen werden.

Nach einer vorteilhaften Ausprägung der Erfindung ist der Frequenzkanal breitbandig und die Informationen werden mit CDMA-Codes gespreizt. Das erfindungsgemäße Verfahren eignet sich folglich besonders für breitbandige Kanäle, in denen die Informationen störrestistenter übertragen werden können. Für TDMA/CMDA-Übertragungsverfahren wird die Erfindung dahingehend weitergebildet, daß nach einem TDMA-Teilnehmerseparierungsverfahren die weiteren Informationen in Zeitschlitzen mit einem bekannten Zeitraster übertragen werden. Dies erlaubt eine Implementierung in das bestehende GSM-Mobilfunknetz, ohne daß das Zeitraster geändert werden muß.

Zur weiteren Reichweitenerhöhung kann sendeseitig eine Fehlerschutzcodierung der ersten Signalisierungsinformationen und der weiteren Information durchgeführt werden, wobei die Fehlerschutzcodierung der ersten Signalisierungsinformation einen besseren Schutz bietet als die Fehlerschutzcodierung der weiteren Informationen. Dies bringt besondere Vorteile mit sich, falls die ersten Signalisierungsinformationen z.B. als Organisationsinformationen omnidirektional gesendet werden müssen und somit kein Antennengewinn für eine verbesserte Übertragung zur Verfügung steht.

Im folgenden wird die Erfindung anhand eines Ausführungsbeispiels bezugnehmend auf zeichnerische Darstellungen näher erläutert.

Dabei zeigen

FIG 1 ein Blockschaltbild eines Mobilfunknetzes,
FIG 2 unterschiedliche Übertragungsverfahren für erste Signalisierungsinformationen und weitere Informationen,
FIG 3 eine schematische Darstellung der Rahmenstruktur der Funkschnittstelle,
FIG 4 ein Blockschaltbild einer Sendeeinrichtung einer Basisstation,
FIG 5 ein Blockschaltbild einer Empfangseinrichtung einer Mobilstation,
FIG 6 ein Blockschaltbild einer Übertragungseinrichtung,
FIG 7 ein Blockschaltbild einer Hochfrequenzeinrichtung,
FIG 8 ein Blockschaltbild einer sendeseitigen Signalverarbeitung, und
FIG 9 ein Blockschaltbild einer empfangsseitigen Signalverarbeitung.

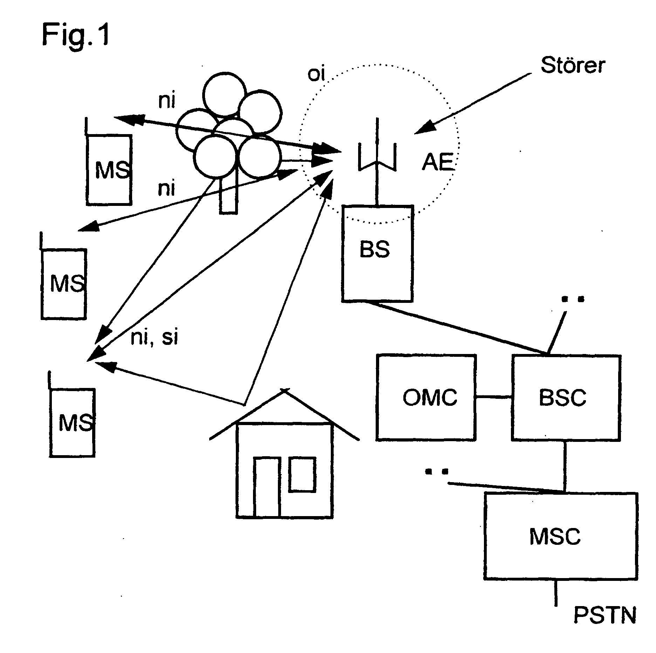

Das in FIG 1 dargestellte Mobil-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobil-Vermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Nachrichtenverbindung zu Mobilstationen MS aufbauen kann.

In FIG 1 sind beispielhaft drei Funkverbindungen zur Übertragung von Nutzinformationen ni bzw. Signalisierungsinformationen si als weitere Informationen zwischen drei Mobilstationen MS und einer Basisstation BS dargestellt. Ein Operations- und Wartungszentrum OMC realisiert Kontroll- und Wartungsfunktionen für das Mobilfunknetz bzw. für Teile davon. Die Funktionalität dieser Struktur ist auf andere Mobil-Kommunikationssysteme übertragbar, in denen die Erfindung zum Einsatz kommen kann.

Die Basisstation BS ist mit einer Antenneneinrichtung AE verbunden, die z.B. aus drei Einzelstrahlern besteht. Jeder der Einzelstrahler strahlt beispielsweise gerichtet in einen Sektor der durch die Basisstation BS versorgten Funkzelle. Es können jedoch alternativ auch eine größere Anzahl von Einzelstahlern (gemäß adaptiver Antennen) eingesetzt werden, so daß auch eine weitergehende räumliche Teilnehmerseparierung mit adaptiven Antennen eingesetzt werden kann. Diese richtungsselektive Abstrahlung erfolgt für die Nutzinformationen ni.

Die Basisstation BS stellt den Mobilstationen Organisationsinformationen oi als erste Signalisierungsinformationen über den Aufenthaltsbereich (LA location area) und über die Funkzelle (Funkzellenkennzeichen) zur Verfügung. Die Organisationsinformationen oi werden gleichzeitig über alle Einzelstahler der Antenneneinrichtung AE abgestrahlt. Eine omnidirektionale Abstrahlung erfolgt auch für Signalisierungsinformationen si zum Teilnehmerrufen (paging), da nicht bekannt ist, in welchem Sektor sich die gesuchte Mobilstation MS befindet.

Die Kommunikationsverbindungen mit den Nutzinformationen ni zwischen der Basisstation BS und den Mobilstationen MS unterliegen einer Mehrwegeausbreitung, die durch Reflexionen beispielsweise an Gebäuden zusätzlich zum direkten Ausbreitungsweg hervorgerufen werden. Durch eine gerichtete Abstahlung durch bestimmte Einzelstrahler der Antenneneinrichtung AE ergibt sich im Vergleich zur omnidirektionalen Abstahlung ein größerer Antennengewinn. Die Qualität der Kommunikationsverbindungen wird durch die gerichtete Abstrahlung verbessert.

Geht man von einer Bewegung der Mobilstationen MS aus, dann führt die Mehrwegeausbreitung zusammen mit weiteren Störungen dazu, daß bei der empfangenden Mobilstation MS sich die Signalkomponenten der verschiedenen Ausbreitungswege eines Teilnehmersignals zeitabhängig überlagern. Weiterhin wird davon ausgegangen, daß sich die Teilnehmersignale verschiedener Basisstationen BS am Empfangsort zu einem Empfangssignal rx in einem Frequenzkanal überlagern. Aufgabe einer empfangenden Mobilstation MS ist es, in den Teilnehmersignalen übertragene Daten d der Nutzinformationen ni, Signalisierungsinformationen si und Daten oid der Organisationsinformationen oi zu detektieren.

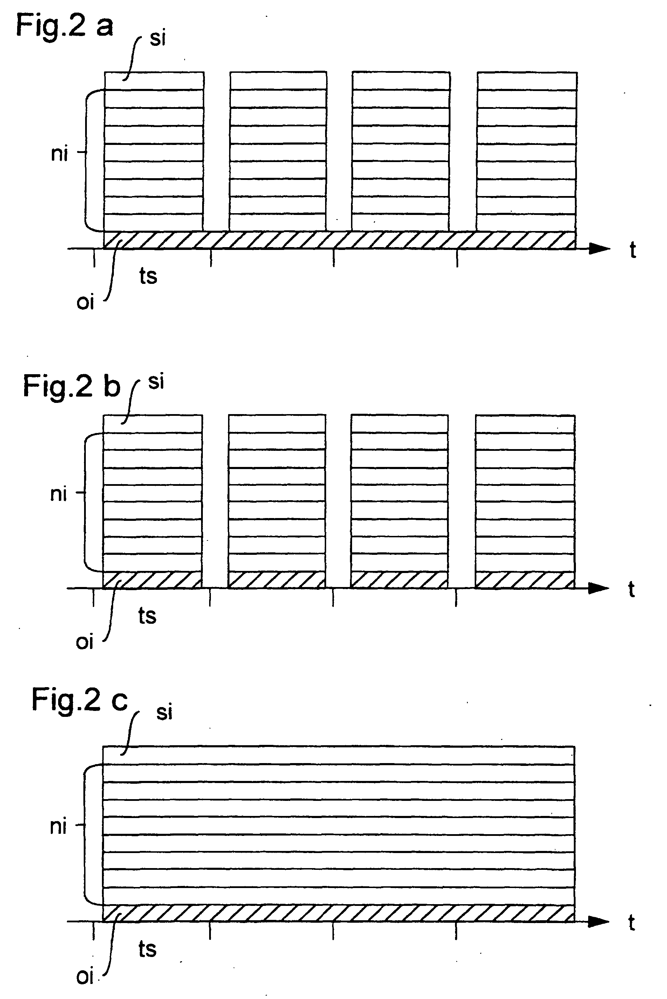

FIG 2 zeigt drei Varianten der Übertragung der Informationen. In FIG 2a werden Nutzinformationen ni und Signalisierungsinformationen si nach einem TDMA-Verfahren und die Organisationsinformationen oi in nicht gepulst, sondern als modulierte Dauerwelle übertragen. Nach FIG 2b werden auch die Organisationsinformationen oi in Zeitschlitzen ts übertragen, währenddessen nach FIG 2c alle Informationen ni, oi, si in Dauerwellenübertragung gesendet werden.

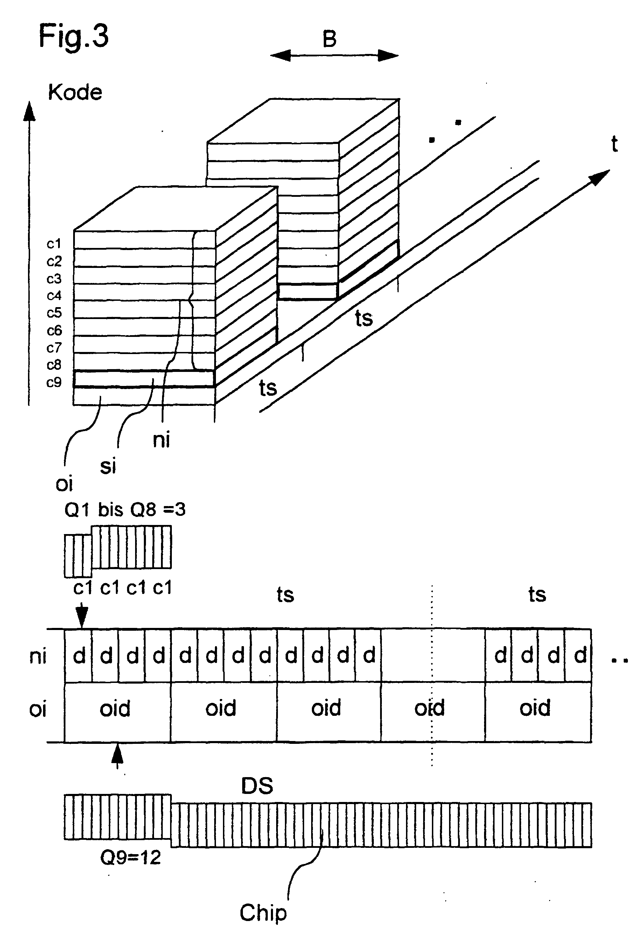

In FIG 3, als detaillierte Ausführung der Variante nach FIG 2a, ist die Übertragung der Teilnehmersignale über die Funkschnittstelle mit einer Bandbreite B, beispielsweise B = 1,6 MHz, gezeigt. Die Funkschnittstelle hat dabei eine Zeitmultiplex- (TDMA) und eine Codemultiplex-Komponente (CDMA). Mehrere Frequenzbänder - nicht dargestellt - können für das Mobilfunknetz vorgesehen sein. Eine Zeitachse t ist derart in ein Zeitraster bestehend aus mehreren Zeitschlitzen ts, beispielsweise 8 pro Zeitrahmen unterteilt, daß eine Übertragung in Funkblöcken erfolgt. Die Teilnehmersignale für mehrere Mobilstationen MS werden gleichzeitig in dem selben Frequenzkanal übertragen. Die Teilnehmerseparierung je Funkblock erfolgt mit Hilfe von Spreizkodes c1 bis c8 bzw. c9 als Spreizkode für einen Signalisierungskanal PCH, so daß acht Teilnehmersignale und ein Signal eines Signalisierungskanal gleichzeitig übertragen werden können. Für Nutzinformationen ni und Signalisierungsinformationen si wird ein einheitliches Spreizverfahren verwendet.

Die Nutzinformationen ni und die Signalisierungsinformationen si werden blockweise in den Zeitschlitzen ts übertragen, währenddessen die Organisationsinformationen oi unabhängig von dem Zeitraster mit einer Dauerwellenübertragung (CW contineous wave) übertragen werden.

Für die Nutzinformationen ni wird eine Leistungsregelung durchgeführt, die abhängig von den individuellen bei der jeweiligen Mobilstation MS und der Basisstation BS gemessenen und signalisierten Empfangsleistungen ist. Für die Signalisierungsinformationen si wird eine Leistungsregelung bei einer individualisierten Signalisierung zu einzelnen Mobilstationen MS eingesetzt. Die Organisationsinformationen oi werden mit einer konstanten Leistung abgestrahlt.

Die Spreizung der Daten d der Nutzinformationen ni und der Daten oid der Organisationsinformationen oi erfolgt gemäß Fig. 3 für die Nutzinformationen ni durch Spreizung jedes Datensymbols d mit einem der Spreizkodes c1 bis c8, wobei der Spreizfaktor, definiert durch Anzahl Chips pro Datensymbol, mit Q1 bis Q8 bezeichnet ist. Der Spreizfaktor Q1 des ersten Teilnehmersignals ist beispielsweise gleich drei. Der Spreizkode c1 wiederholt sich von Datensymbol d zu Datensymbol d. Die Spreizung der Signalisierungsinformationen si mit einem Spreizkodes c9 erfolgt entsprechend der Spreizung der Nutzinformationen ni.

Die Spreizung der Daten oid der Organisationsinformationen oi erfolgt nach einem DS-CDMA-Verfahren, wobei die Symboldauer eines dieser Datensymbole wesentlich größer ist als die der Daten d der Nutzinformationen ni. Der DS-Spreizkode ist ein fortlaufender Spreizkode mit einem Spreizfaktor Q10=12, der größer als der der Nutzinformationen ni ist. Dabei ist die Länge der Chips zur Spreizung der Nutzinformationen ni und der Organisationsinformationen oi gleich.

Die Datenrate der Organisationsinformationen oi ist beispielsweise 200 Bit/s, währenddessen die Nutzinformationen ni im Falle einer Sprachübertragung mit einer Datenrate von 16 Kbit/s übertragen werden. In Fig. 3 ist das Verhältnis der Spreizfaktoren Q1 zu Q9 also nicht maßstabsgetreu angegeben. Der mögliche Prozessgewinn für die Organisationsinformationen oi beträgt im Ausführungsbeispiel P = 1,6 MHz / 200 Hz also knapp 40 dB.

Während der Pausen zwischen übertragenen Funkblöcken mit Daten d der Nutzinformationen ni wird die Übertragung der Organisationsinformationen oi fortgesetzt.

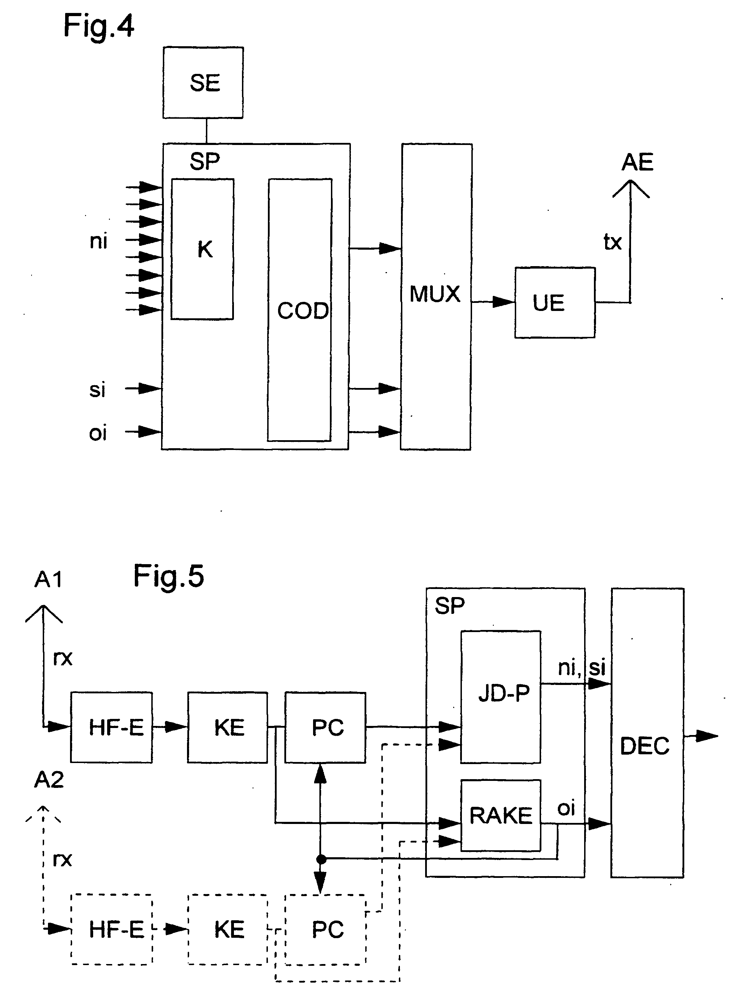

Fig. 4 zeigt eine Struktur einer Sendeeinrichtung, beispielsweise in der Basisstation BS. Die Sendeeinrichtung enthält ein Signalverarbeitungseinrichtung SP, beispielsweise einen digitalen Signalprozessor, der von einer Steuereinrichtung SE gesteuert wird. Weiterhin enthält die Sendeeinrichtung eine Codiereinrichtung COD, die später gezeigte Funktionen der Faltungs- und Blockcodierung, sowie der Verwürfelung ausführt. Eine Kombinationseinrichtung MUX kombiniert Signale der Nutzinformationen ni, der Signalisierungsinformationen si und der Organisationsinformationen oi zu einem Sendesignal tx. Die Sendeleistung der Organisationsinformationen oi entspricht in etwa der Sendeleistung der weiteren Informationen si, ni. Eine Übertragungseinrichtung UE bereitet das Sendesignal tx auf eine Abstrahlung vor. Die Abstahlung des Sendesignals tx erfolgt über die Antenneneinrichtung AE.

In der Signalverarbeitungseinrichtung SP werden die Teilnehmersignale von acht Verbindungen eines Zeitschlitzes in einer Multiplexeinrichtung K einem Zeitschlitz ts zugeordnet. Durch die Spreizung der Informationen ni, si, oi in der Signalverarbeitungseinrichtung SP mit den zugeordneten Spreizkodes entstehen Signale, die in der Kombinationseinrichtung MUX zu einem gemeinsamen breitbandigen Signal in einem Frequenzkanal überlagert werden.

Eine Empfangseinrichtung ist in Fig. 5 gezeigt. Von der Antenneneinrichtung A1 empfangene Empfangssignale rx werden in einer Hochfrequenzeinrichtung HF-E, die mit der Übertragungseinrichtung UE der Sendeeinrichtung korrespondiert, verstärkt, ins Basisband umgesetzt und demoduliert. Eine Koppeleinrichtung KE verbindet die Hochfrequenzeinrichtung HF-E über eine Einrichtung PC zum Entfernen des Einflusses der Organisationsinformationen oi auf die Nutz- und Signalisierungsinformationen ni, si mit einer Signalverarbeitungseinrichtung SP.

Die Einrichtung PC zum Entfernen des Einflusses der Organisationsinformationen oi wird pro Antennenelement A1, A2 angewendet, d.h. bei Antennendiversitäts-Empfang wird diese Verbesserung des Empfangssignals rx in beiden Empfangszweigen durchgeführt. Wird nur ein Antennenelement A1 als Antenneneinrichtung AE verwendet, ist nur eine Einrichtung PC vorgesehen. Die Einrichtung PC zum Entfernen des Einflusses der Organisationsinformationen oi wird dabei innerhalb der Signalverarbeitungseinrichtung SP realisiert.

In der Einrichtung PC wird eine Kanalschätzung bezüglich der Organisationsinformationen oi basierend auf im Empfänger bekannten Chipsequenzen durchgeführt, dabei werden Kanalkoeffizienten h

$$h = [h_1, h_2 ... h_W]^T$$

bestimmt, die die Kanalimpulsantwort einer Länge W angeben.

Im folgenden werden nur die B Abtastwerte betrachtet, die nur vom auszuwertenden Funkblock beeinflußt sind. Interferenzen von vorherigen oder nachfolgenden Funkblöcken müssen somit nicht berücksichtigt werden.

Das Empfangssignal rx korrespondiert mit Abtastwerten e, die einen Vektor

$$e = [e_1, e_2 ... e_B]^T = e_{pi} + e'$$

entsprechen. Die Vektoren $e_{pi}$ und e' sind die Anteile der Organisationsinformationen oi (Pilotkanal) bzw. der weiteren Informationen ni, si sowie des additiven Rauschens (in e').

Im Empfänger ist eine Chipsequenz bekannt, die innerhalb der Organisationsinformationen oi übertragen wird. Diese Chipsequenz der Länge B+W-1 wird als $s_i$ bezeichnet, $1 \leq i \leq B+W-1$, so daß eine Matrix $P_s$ mit komplexen Werten von zumindest Teilen der Abtastwerte $e_{pi}$ der Organisationsinformationen oi angenommen werden kann:

$$e_{pi} = \begin{bmatrix} s_W & s_{W-1} & s_{W-2} & .. & s_1 \\ s_{W+1} & s_W & s_{W-1} & .. & s_2 \\ . & . & . & .. & . \\ s_{W+B-1} & s_{W+B-2} & s_{W+B-3} & .. & s_B \end{bmatrix} \cdot h = P_s \cdot h .$$

Eine mit einer Gauss-Markov-Schätzung durchgeführte Kanalschätzung hoher Genauigkeit ergibt als Schätzwerte somit:

$$\hat{h} = (P_s^H R_{e'e'}^{-1} P_s)^{-1} P_s^H R_{e'e'}^{-1} \cdot e, \text{ mit } R_{e'e'} = E\{e'e'^H\} .$$

Alternativ kann auch ein signalangepaßtes Filter eingesetzt werden, daß bei etwas geringerer Leistungsfähigkeit aufwandsgünstiger zu realisieren ist.

Wird der Rauschanteil in e' vernachlässigt, so kann $R_{e'e'}$ aus den bekannten spektralen Eigenschaften eines Pulsformungsfilters auf der Sendeseite ermittelt werden.

Bei Annahme, daß $R_{e'e'} = \sigma^2 I$ und bei derartigen Autokorrelationseigenschaften der Chipsequenz, daß $P_s^H P_s$ der skalierten Einheitsmatrix entspricht, reduziert sich die Kanalschätzung zu einem signalangepaßten Filter:

$$\hat{h} = P_s^H \cdot e.$$

Das Entfernen des Einflusses der Organisationsinformationen kann daraufhin gemäß folgender Ausgleichsrechnung erfolgen:

$$\hat{e}' = e - P_s \cdot \hat{h},$$

so daß anschließend der modifizierte Vektor ê' bei der Datendetektion verwendet wird.

Ändern sich die geschätzten Kanalkoeffizienten h nur wenig von Funkblock zu Funkblock, so können die Empfangssignal mehrerer Funkblöcke für die Kanalschätzung berücksichtigt werden.

Bei zwei berücksichtigten Funkblöcken ergeben sich Abtastwerte nach:

$$e^{(2)} = [e_1, e_2 ... e_{2B+W-1}]^T = e^{(2)}_{pi} + e^{(2)},$$

wobei der Einfluß der Organisationsinformationen oi folgendermaßen ausgedrückt werden kann:

$$e^{(2)}{}_{pi} = \begin{bmatrix} P_s \\ P_0 \\ P_s \end{bmatrix} \cdot h = P \cdot h \,,$$

mit $P_s$ entsprechend obenstehender Definition und

$$P_0 = \begin{bmatrix} s_1 & s_{W+B-1} & s_{W+B-2} & \cdot\cdot & s_{B+1} \\ s_2 & s_1 & s_{W+B-1} & \cdot\cdot & s_{B+2} \\ \cdot & \cdot & \cdot & \cdot\cdot & \cdot \\ s_{W-1} & s_{W-2} & s_{W-3} & \cdot\cdot & s_{W+B-1} \end{bmatrix} \in C^{(W-1)\times W} \,.$$

Die Ausdrücke ê',e,$P_s$ werden folglich bei der Gauss-Markov-Schätzung durch $\hat{e}^{(2)\prime}$,$e^{(2)}$,P ersetzt.

Bei stärkeren Schwankungen sollte jedoch eine adaptive Kanalschätzung eingesetzt werden, die auf einem LMS- oder RLS-Verfahren basieren können. Bei stark zeitvarianten Kanälen ist die adaptive Kanalschätzung wesentlich zuverlässiger als die auf einer Mittambelauswertung beruhende Schätzung. Zudem kann vorgesehen werden, daß die weiteren Informationen ni, si ohne Trainingssequenz (Mittambel) inmitten von zwei Datenteilen gesendet werden, sondern dafür die Datenrate durch Einfügen weiterer Nutzdaten erhöht wird.

Die Signalverarbeitungseinrichtung SP als digitaler Signalprozessor enthält weiterhin einen JD-Prozessor JD-P zum Detektieren der Nutzinformationen ni und der Signalisierungsinformationen si nach dem JD-CDMA-Verfahren und einen RAKE-Empfänger zum Detektieren der Organisationsinformationen oi.

Findet keine Dauerwellenübertragung der Organisationsinformationen oi statt, so werden auch die Organisationsinformationen oi im JD-Prozessor JD-P detektiert. Werden Organisations- bzw. Signalisierungsinformationen oi, si in eigenen Zeitschlitzen ts übertragen, dann wird für diese Zeitschlitze nur deren Detektion durchgeführt.

Die Detektion erfolgt parallel, wobei zur Detektion der Organisationsinformationen oi die Signalverabeitungseinrichtung SP die empfangenen Daten d mit den im Empfänger bekannten Spreizkodes korreliert, damit die Bandbreite der Empfangssignale verringert und der Abstand von Signalpegel zu Rauschpegel vergrößert wird. Damit ist die Detektion auch bei Interferenzen durch Störer oder zwischen den Symbolen möglich. Der Einrichtung PC werden aus dem RAKE-Empfänger die detektierten Organisationsinformationen oi für die weitere Ausgleichsrechnung rückgeführt. In einem Decodierer DEC wird die sendeseitige Codierung rückgängig gemacht.

In Mobilstationen MS mißt der RAKE-Empfänger RAKE bzw. der JD-Prozessor JD-P die Empfangsleistung für die Organisationsinformationen oi in einem Organisationskanal BCCH und benutzt sie als Referenz für Entscheidungen zum Wechsel in andere Zellen und für eine Leistungsregelung. Für Teilnehmerrufinformationen (paging) wird ein Teilnehmerrufkanal PCH in Abwärtsrichtung benutzt, hierbei führen die Mobilstationen MS einen Vergleich mit den Angaben über die gerufenen Mobilstation MS durch. Korrespondieren die Angaben mit mobilstationsbezogenen Werten, kann ein Teilnehmerzugriff in einem Teilnehmerzugriffskanal RACH in Aufwärtsrichtung erfolgen. Für die drei genannten Kanäle BCCH, PCH und RACH wird ein verstärkter Fehlerschutz durchgeführt, da bei Ihnen kein richtungsselektives Senden oder Empfangen möglich ist. Der verstärkte Fehlerschutz geht über einen Fehlerschutz hinaus, der evt. für andere Zwecke vorgesehen ist.

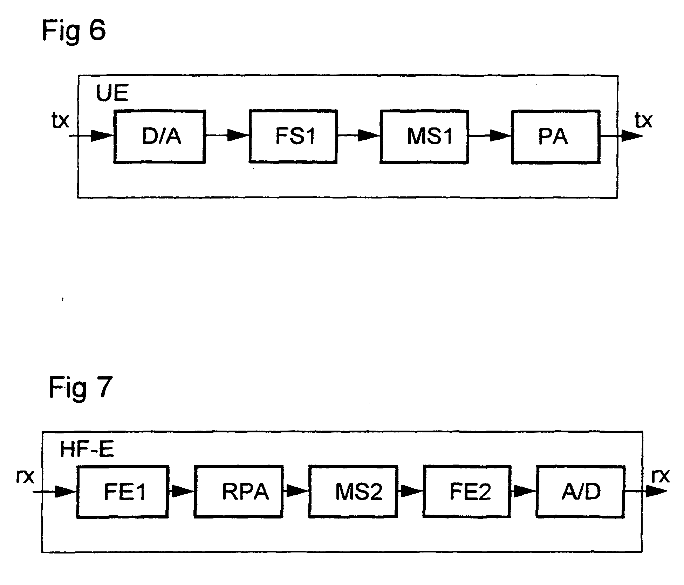

Die Komponenten der Funkstationen MS, BS zur Aufbereitung der hochfrequenten Sende- bzw. Empfangssignale tx, rx ist in FIG 6 und 7 gezeigt.

Die Übertragungseinrichtung UE nach Fig. 6 enthält einen Digital/Analog-wandler D/A für Real- und Imaginärteil, erste analoge Sendefilter FS1 zum Tiefpaßfiltern der Signale im Basisband, eine erste Mischstufe MS1 zum Umsetzen der Sendesignale tx ins Sendefrequenzband, und einen Leistungsverstärker PA zum Verstärken der Sendesignale tx.

Die Hochfrequenzeinrichtung HF-E nach Fig. 7 enthält einen ersten analogen Empfangsfilter FE1, einen Empfangsverstärker RPA zum Messen und Verstärken der Empfangssignale rx, eine zweite Mischstufe MS2 zum Umsetzen der Empfangssignale rx ins Basisband (es können auch mehrere Mischstufen genutzt werden), zweite analoge Empfangsfilter FE2 und schließlich einen Analog/Digital-Wandler A/D für Real- und Imaginärteil, der digitale Empfangssignale rx erzeugt.

Die Hochfrequenzeinrichtung HF-E und die Übertragungseinrichtung UE sind breitbandig, beispielsweise für ein Frequenzband von mindestens B = 1,6 MHz, ausgelegt.

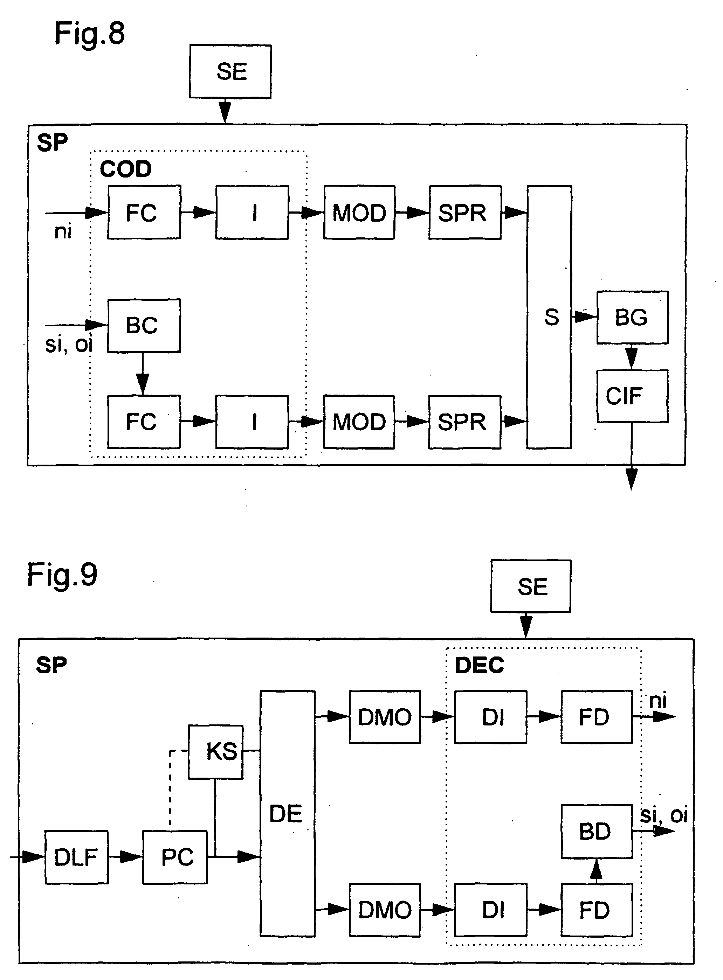

Der Sender nach FIG 8 nimmt die zuvor digitalisierten Datensymbole einer Datenquelle auf. Es findet für die Signalisierungsinformationen si, oi eine Blockcodierung statt, worauf sich für alle Informationen ni, si, oi eine Kanalcodierung im Faltungscodierer FC anschließt, beispielsweise der Rate 1/2 und constraint length 5 für die Nutzinformationen ni. Darauf folgt eine Verwürfelung im Interleaver I mit einer Verwurfelungstiefe von 4 oder 16.

Die verwürfelten Daten werden anschließend in einem Modulator MOD 4-PSK moduliert, in 4-PSK Symbole umgewandelt und daraufhin in Spreizmitteln SPR entsprechend individueller Spreizcodes gespreizt. Diese Verarbeitung wird in der Signalverarbeitungseinrichtung SP parallel für die Nutzinformationen ni und Signalisierungsinformationen si, oi durchgeführt.

In einem Summierglied S werden die gespreizten Daten der Datenkanäle für die Nutzinformationen ni und die Signalisierungsinformationen si überlagert, wobei bei dieser Uberlagerung die Nutzinformationen eine Gewichtung entsprechend der gewünschten Sendeleistungseinstellung erfahren. Das überlagerte Signal wird einem Funkblockbildner BG zugeführt, der ggf. unter der Berücksichtigung der verbindungsindivuellen Mittambel den Funkblock zusammenstellt.

Da komplexe CDMA-Codes verwendet werden, die von binären CDMA-Codes durch eine Multiplikation mit $j^{q-1}$ abgeleitet werden, ist das Ausgangssignal eines Chipimpulsfilters CIF, das sich an den Funkblockbildner BG anschließt GMSK moduliert und hat eine in etwa konstante Einhüllende falls die Verbindung nur einen Datenkanal nutzt. Das Chipimpulsfilter CIF führt eine Faltung mit einem GMSK-Hauptimpuls durch.

Empfangsseitig (siehe FIG 9) findet nach einer analogen Verarbeitung in der Hochfrequenzeinrichtung HF-E eine digitale Tiefpaßfilterung der Empfangssignale in einen digitalen Tiefpaßfilter DLF statt. Daraufhin wird die zuvor beschriebene Eliminierung des Einflusses der Organisationsinformationen oi auf das Empfangssignals durchgeführt. Ein Teil des somit verbesserten Empfangssignals wird einem Kanalschätzer KS übermittelt. Die Datenschätzung im Joint Detection Datenschätzer DE wird für alle Verbindungen mit Nutzinformationen ni und die Signalisierungsinformationen si, oi gemeinsam durchgeführt. Im Fall des RAKE-Empfängers RAKE wird die Organisationsinformation oi getrennt ausgewertet. Nach der Trennung der Informationen ni, si, oi findet eine Demodulation in einem Demodulator DMO, eine Entwürfelung in einem Deinterleaver DI und eine Kanaldecodierung in Faltungsdecodierer FD statt. Für die Signalisierungsinformationen si, oi wird zusätzlich eine Blockdecodierung in einem Blockdecodierer BD durchgeführt.

Sendeseitig und empfangsseitig wird die digitale Signalverarbeitung durch eine Steuereinrichtung SE gesteuert. Die Steuereinrichtung SE berücksichtigt insbesondere die Anzahl der Datenkanäle pro Verbindung, die Spreizcodes der Datenkanäle, die aktuelle Funkblockstruktur, die Anforderungen an die Kanalschätzung und die individuellen Einstellungen für die Fehlerschutzcodierung und -decodierung für die unterschiedlichen Informationen ni, si, oi.

**Patentansprüche**

1. Verfahren zur Datenübertragung zwischen Funkstationen (BS, MS) in einem Funk-Kommunikationssystem, bei dem

   - sendeseitig erste Signalisierungsinformationen (oi, si) mit weiteren Informationen (si, ni) zu einem Summensignal (tx) überlagert werden, und
   - das Summensignal (tx) in einem Frequenzkanal gesendet wird,

   wobei die ersten Signalisierungsinformationen (oi, si) und die weiteren Informationen (si, ni) anhand von individuellen Feinstrukturen unterscheidbar sind,

   - empfangsseitig ein Empfangssignal (rx) ausgewertet wird,

   **dadurch gekennzeichnet, dass**

   - zunächst ein Einfluß der ersten Signalisierungsinformationen (oi, si) auf die weiteren Informationen (si, ri) durch eine bezüglich des Empfangssignals (rx) durchgeführte Ausgleichsrechnung verringert wird
   - und anschließend eine Detektion der weiteren Informationen (si, ni) in dem der Ausgleichsrechnung bereits unterzogenen Empfangssignal durchgeführt wird.

2. Verfahren nach Anspruch 1, bei dem
   sendeseitig die etsten Signalisierungsinformationen (oi, si) und die weiteren Informationen (si, ni) mit in etwa gleicher Richtungsselektivität abgestrahlt werden, und
   empfangsseitig eine Kanalschätzung anhand der ersten Signalisierungsinformationen (oi, si) durchgeführt wird.

3. Verfahren nach Anspruch 2, bei dem

sendeseitig die weiteren Informationen (si, ni) ohne Trainingssequenzen mit verlängertem Datenteil gesendet werden.

4. verfahren nach Anspruch 1, bei dem
sendeseitig die ersten Signalisierungsinformationen (oi, si) mit geringerer Richtungsselektivität als die weiteren Informationen (si, ni) abgestrahlt werden, und
empfangsseitig eine Kanalschätzung anhand von in die weiteren Informationen (si, ni) eingebetteter Trainingssequenzen durchgeführt wird.

5. Verfahren nach einem der vorherigen Ansprüche, bei dem empfangsseitig das Entfernen des Einflusses der Signalisierungsinformationen (oi, si) für die Empfangs Signale (rx) jedes einzelnen Antennenelements (A1, A2) durchgeführt wird.

6. Verfahren nach einem der vorherigen Ansprüche, bei dem empfangsseitig die Detektion der weiteren Informationen (si, ni) mit einem Algorithmus zur gemeinsamen Detektion durchgeführt wird.

7. Verfahren nach einem der vorherigen Ansprüche, bei dem sendeseitig die ersten Signalisierungsinformationen (oi, si) in einer Dauerwellenübertragung abgestrahlt werden, währenddessen die weiteren Informationen (si, ni) in Zeitschlitzen (ts) nach einem TDMA-Übertragungsverfahren abgestrahlt werden.

8. Verfahren nach einem der Ansprüche 1 bis 6, bei dem sendeseitig die ersten Signalisierungsinformationen (oi, si) und die weiteren Informationen (si, ni) in Zeitschlitzen (ts) nach einem TDMA-Übertragungsverfahren abgestrahlt werden.

9. Verfahren nach einem der vorherigen Ansprüche, bei dem empfangsseitig das Entfernen des Einflusses der ersten Signalisierungsinformationen (oi, si) derart erfolgt, daß eine Kanalschätzung für die ersten Signalisierungsinformationen (oi, si) durchgeführt wird und Kanalkoeffizienten (h) ermittelt werden,
von dem Empfangssignal (rx) eine Größe subtrahiert wird, die dem Produkt der Kanalkoeffizienten (h) und einer bekannten Matrix (Ps) von zumindest Teilen (sw) der ersten Signalisierungsinformationen (oi, si) entspricht.

10. Verfahren nach Anspruch 9, bei dem
das Ermitteln der Kanalkoeffizienten (h) durch eine Gauss-Markov-Schätzung oder ein signalangepaßtes Filter erfolgt.

11. Verfahren nach einem der Ansprüche 9 oder 10, bei dem das Entfernen des Einflusses der ersten Signalisierungsinformationen (oi, si) basierend auf Kanalschätzungen zu mehreren Zeitpunkten erfolgt.

12. Verfahren nach einem der vorherigen Ansprüche, bei dem der Frequenzkanal breitbandig ist und die Informationen (oi, si, ni) mit CDMA-Codes (c1..c10) gespreizt werden.

13. Verfahren nach einem der vorherigen Ansprüche, bei dem die ersten Signalisierungsinformationen (oi, si) nach einem DS-CDMA-Verfahren gespreizt übertragen werden.

14. Verfahren nach einem der vorherigen Ansprüche, bei dem sendeseitig eine Fehlerschutzcodierung der ersten Signalisierungsinformationen (oi, si) und der weiteren Information (si, ni) durchgeführt wird, wobei die Fehlerschutzcodierung der ersten Signalisierungsinformation (si, oi) einen besseren Schutz bietet als die Fehlerschutzcodierung der weiteren Informationen (si, ni).

15. Verfahren nach einem der vorherigen Ansprüche, bei dem die ersten Signalisierungsinformationen (oi, si) omnidirektional gesendet werden.

16. Empfangseinrichtung für eine Funkstation (MS),

- mit einer Hochfrequenzeinrichtung (HF) zum Demodulieren von Empfangssignalen (rx), wobei in den Empfangssignalen (rx) erste Signalisierungsinformationen (oi, si) und weitere Informationen (si, ni), die anhand von individuellen Feinstrukturen unterscheidbar sind, zu einem Summensignal überlagert sind,
- mit einer Koppeleinrichtung (KE) zum verbinden der Hochfrequenzeinrichtung (HF) mit einer Signalverarbeitungseinrichtung (SP),

**dadurch gekennzeichnet,**

- **dass** die Signalverarbeitungseinrichtung (SP) eine Einrichtung (PC) zum Verringern des Einflusses der ersten Signalisierungsinformationen (oi, si) auf die weiteren Informationen (si, ni) durch eine Ausgleichsrechnung und eine Detektionseinrichtung (DE) für die weiteren Informationen (si, ni) enthält
- und **dass** die Einrichtung (PC) die Ausgleichsrechnung durchführt, bevor die Detektionseinrichtung (DE) eine Detektion der weiteren Informationen beginnt.

17. Empfangseinrichtung nach Anspruch 16,
bei der die Detektionseinrichtung (DE) einen JD-CDMA-Prozessor (JD-P) für die weiteren Informationen (ni) enthält.

18. Empfangseinrichtung nach Anspruch 16 oder 17,
mit einem mit der Hochfrequenzeinrichtung (HF) und der Signalverarbeitungseinrichtung (SP) verbundenen Analog/Digital-Wandler (ADC) zum Umwandeln der Empfangssignale (rx) in Symbole mit diskretem Wertevorrat für eine Weiterverarbeitung in der Signalverarbeitungseinrichtung (SP).

19. Mobilstation (MS) mit einer Empfangseinrichtung nach einem der Ansprüche 16 bis 18.

## Claims

1. Method for transmitting data between radio stations (BS, MS) in a radio communication system, in which

- first signalling information items (oi, si) with further information items (si, ni) are superimposed at the transmitting end to form an aggregate signal (tx), and
- the aggregate signal (tx) is transmitted in a frequency channel, it being possible to distinguish the first signalling information items (oi, si) and the further information items (si, ni) with the aid of individual fine structures,
- a received signal (rx) is evaluated at the receiving end,

**characterized in that**

- firstly, an influence of the first signalling information items (oi, si) on the further information items (si, ni) is reduced by means of a compensation calculation carried out with reference to the received signal (rx),
- and subsequently detection of the further information items (si, ni) is carried out in the received signal already subjected to the compensation calculation.

2. Method according to Claim 1, in which the first signalling information items (oi, si) and the further information items (si, ni) are emitted at the transmitting end with approximately the same directional selectivity, and a channel estimation is carried out at the receiving end with the aid of the first signalling information items (oi, si).

3. Method according to Claim 2, in which the further information items (si, ni) are transmitted at the transmitting end without training sequences with a lengthened data component.

4. Method according to Claim 1, in which the first signalling information items (oi, si) are emitted at the transmitting end with a lower level of directional selectivity than the further information items (si, ni), and a channel estimation is carried out at the receiving end with the aid of training sequences embedded in the further information items (si, ni).

5. Method according to one of the preceding claims, in which the influence of the signalling information items (oi, si) is removed at the receiving end for the received signals (rx) of each individual antenna element (A1, A2).

6. Method according to one of the preceding claims, in which the further information items (si, ni) are detected at the receiving end with the aid of an algorithm for joint detection.

7. Method according to one of the preceding claims, in which the first signalling information items (oi, si) are emitted at the transmitting end in a continuous wave transmission, whereas the further information items (si, ni) are emitted in time slots (ts) using a TDMA transmission method.

8. Method according to one of Claims 1 to 6, in which the first signalling information items (oi, si) and the further information items (si, ni) are emitted at the transmitting end in time slots (ts) using a TDMA transmission method.

9. Method according to one of the preceding claims, in which the influence of the first signalling information items (oi, si) is removed at the transmitting end in such a way that a channel estimation is carried out for the first signalling information items (oi, si), and channel coefficients (h) are determined, and a quantity is subtracted from the received signal (rx) which corresponds to the product of the channel coefficients (h) and a known matrix (Ps) of at least parts (sw) of the first signalling information items (oi, si).

10. Method according to Claim 9, in which the channel coefficients (h) are determined by means of a Gauss-Markov estimation or a signal-matched filter.

11. Method according to one of Claims 9 or 10, in which the influence of the first signalling information items (oi, si) is removed on the basis of channel estimations at a plurality of instants.

12. Method according to one of the preceding claims, in which the frequency channel is a broadband channel, and the information items (oi, si, ni) are spread with the aid of CDMA codes (c1..c10).

13. Method according to one of the preceding claims, in which the first signalling information items (oi, si) are transmitted in a spread fashion using a DS-CDMA method.

14. Method according to one of the preceding claims, in which error protection coding of the first signalling information items (oi, si) and the further information item (si, ni) is carried out at the transmitting end, the error protection coding of the first signalling information item (si, oi) offering better protection than the error protection coding of the further information items (si, ni).

15. Method according to one of the preceding claims, in which the first signalling information items (oi, si) are transmitted omnidirectionally.

16. Receiver for a radio station (MS),

 - having a radio-frequency device (HF) for demodulating received signals (rx), first signalling information items (oi, si) and further information items (si, ni), which can be distinguished with the aid of individual fine structures, being superimposed in the received signals (rx) to form an aggregate signal,
 - having a coupling device (KE) for connecting the radio-frequency device (HF) to a signal-processing device (SP),

 **characterized**

 - **in that** the signal-processing device (SP) includes a device (PC) for reducing the influence of the first signalling information items (oi, si) on the further information items (si, ni) by means of a compensation calculation, and a detection device (DE) for the further information items (si, ni),
 - and **in that** the device (PC) carries out the compensation calculation before the detection device (DE) begins to detect the further information items.

17. Receiver according to Claim 16, in which the detection device (DE) includes a JD-CDMA processor (JD-P) for the further information items (ni).

18. Receiver according to Claim 16 or 17, having an analog/digital converter (ADC), connected to the radio-frequency device (HF) and the signal-processing device (SP), for converting the received signals (rx) into symbols with a discrete set of values for further processing in the signal-processing device (SP).

19. Mobile station (MS) having a receiver according to one of Claims 16 to 18.

**Revendications**

1. Procédé pour la transmission de données entre des stations radio (BS, MS) dans un système de radiocommunication, dans lequel

- côté émetteur, des premières informations de signalisation (oi, si) sont superposées avec des informations supplémentaires (si, ni) pour former un signal composite (tx), et
- le signal composite (tx) est émis dans un canal fréquentiel, les premières informations de signalisation (oi, si) et les informations supplémentaires (si, ni) pouvant être différenciées sur la base de structures fines individuelles,
- côté récepteur, un signal de réception (rx) est analysé,

**caractérisé en ce que**

- on commence par réduire une influence des premières informations de signalisation (oi, si) sur les informations supplémentaires (si, ni) grâce à un calcul d'égalisation exécuté par rapport au signal de réception (rx),
- et on procède ensuite à une détection des informations supplémentaires (si, ni) dans le signal de réception ayant déjà été soumis au calcul d'égalisation.

2. Procédé selon la revendication 1, dans lequel, côté émetteur, les premières informations de signalisation (oi, si) et les informations supplémentaires (si, ni) sont émises avec une directivité à peu près identique et, côté récepteur, une estimation de canal est exécutée sur la base des premières informations de signalisation (oi, si).

3. Procédé selon la revendication 2, dans lequel, côté émetteur, les informations supplémentaires (si, ni) sont émises sans séquences d'apprentissage avec un bloc de données plus long.

4. Procédé selon la revendication 1, dans lequel, côté émetteur, les premières informations de signalisation (oi, si) sont émises avec une directivité moins grande que les informations supplémentaires (si, ni) et, côté récepteur, une estimation de canal est exécutée sur la base de séquences d'apprentissage insérées dans les informations supplémentaires (si, ni).

5. Procédé selon l'une quelconque des revendications précédentes, dans lequel, côté récepteur, on procède à l'élimination de l'influence des informations de signalisation (oi, si) pour les signaux de réception (rx) de chaque élément d'antenne (A1, A2) individuel.

6. Procédé selon l'une quelconque des revendications précédentes, dans lequel, côté récepteur, la détection des informations supplémentaires (si, ni) est exécutée à l'aide d'un algorithme permettant la détection commune.

7. Procédé selon l'une quelconque des revendications précédentes, dans lequel, côté émetteur, les premières informations de signalisation (oi, si) font l'objet d'une transmission en onde continue, tandis que les informations supplémentaires (si, ni) sont émises dans des intervalles de temps (ts) selon un procédé de transmission TDMA.

8. Procédé selon l'une des revendications 1 à 6, dans lequel, côté émetteur, les premières informations de signalisation (oi, si) et les informations supplémentaires (si, ni) sont émises dans des intervalles de temps (ts) selon un procédé de transmission TDMA.

9. Procédé selon l'une quelconque des revendications précédentes, dans lequel, pour éliminer, côté récepteur, l'influence des premières informations de signalisation (oi, si), on procède à une estimation de canal pour les premières informations de signalisation (oi, si) et on détermine les coefficients (h) du canal, et dans lequel on soustrait du signal de réception (rx) une grandeur qui correspond au produit des coefficients (h) du canal et d'une matrice ($P_s$) connue d'au moins des parties (sw) des premières informations de signalisation (oi, si).

10. Procédé selon la revendication 9, dans lequel la détermination des coefficients (h) du canal se fait au moyen d'une estimation de Gauss-Markov ou à l'aide d'un filtre adapté pour les signaux.

11. Procédé selon l'une des revendications 9 ou 10, dans lequel on procède à l'élimination de l'influence des premières informations de signalisation (oi, si) en se basant sur des estimations de canal à plusieurs instants.

12. Procédé selon l'une quelconque des revendications précédentes, dans lequel le canal fréquentiel est un canal à large bande et les informations (oi, si, ni) sont étalées grâce à des codes CDMA (c1..c10).

**13.** Procédé selon l'une quelconque des revendications précédentes, dans lequel les premières informations de signalisation (oi, si) font l'objet d'une transmission étalée selon un procédé DS-CDMA.

**14.** Procédé selon l'une quelconque des revendications précédentes, dans lequel, côté émetteur, on procède à un codage de protection contre les erreurs des premières informations de signalisation (oi, si) et des informations supplémentaires (si, ni), le codage de protection contre les erreurs des premières informations de signalisation (si, oi) offrant une meilleure protection que le codage de protection contre les erreurs des informations supplémentaires (si, ni).

**15.** Procédé selon l'une quelconque des revendications précédentes, dans lequel les premières informations de signalisation (oi, si) font l'objet d'une émission omnidirectionnelle.

**16.** Récepteur pour une station radio (MS)

- comprenant un dispositif haute fréquence (HF) servant à démoduler les signaux de réception (rx), les premières informations de signalisation (oi, si) et les informations supplémentaires (si, ni), qui peuvent être différenciées sur la base de structures fines individuelles, étant superposées, dans les signaux de réception (rx), pour former un signal composite,
- comprenant un dispositif de couplage (KE) servant à relier le dispositif haute fréquence (HF) à un dispositif de traitement du signal (SP),

**caractérisé en ce que**

- le dispositif de traitement du signal (SP) comprend un dispositif (PC) pour réduire l'influence des premières informations de signalisation (oi, si) sur les informations supplémentaires (si, ni) grâce à un calcul d'égalisation, et un dispositif de détection (DE) pour les informations supplémentaires (si, ni),
- et **en ce que** le dispositif (PC) exécute le calcul d'égalisation avant que le dispositif de détection (DE) ne commence une détection des' informations supplémentaires.

**17.** Récepteur selon la revendication 16, dans lequel le dispositif de détection (DE) comprend un processeur JD-CDMA (JD-P) pour les informations supplémentaires (ni).

**18.** Récepteur selon l'une des revendications 16 ou 17, comprenant un convertisseur analogique/numérique (ADC) relié au dispositif haute fréquence (HF) et au dispositif de traitement du signal (SP) et servant à convertir les signaux de réception (rx) en symboles ayant un ensemble de valeurs discrètes en vue d'un traitement ultérieur dans le dispositif de traitement du signal (SP).

**19.** Station mobile (MS) comprenant un récepteur selon l'une des revendications 16 à 18.

Fig.1

Fig.2 a

Fig.2 b

Fig.2 c

# Fig.3

Kode

Q1 bis Q8 =3

c1 c1 c1 c1

Q9=12

DS

Chip

## Fig.4

SE

SP

ni

K

COD

si

oi

MUX

AE

tx

UE

## Fig.5

A1

rx

HF-E

KE

PC

A2

rx

HF-E

KE

PC

SP

JD-P

ni, si

RAKE

oi

DEC

## Fig 6

## Fig 7

## Fig.8

## Fig.9